# EUROPEAN PATENT SPECIFICATION

(11) **EP 1 768 220 B1**
(45) Date of publication and mention of the grant of the patent: **19.07.2017**
(21) Application number: 06118537.7
(22) Date of filing: 07.08.2006
(51) Int. Cl.: H02G 3/12

(54) **Installation box with continuously adjustable mounting members**
Anschlussdose mit kontinuierlich verstellbaren Montageelementen
Boîte d'installation avec des éléments de montage ajustables continus

(30) Priority: 12.08.2005 SE 0501811
(43) Date of publication of application: 28.03.2007
(73) Proprietor: Thorsman & Co. AB, 611 29 Nyköping (SE)
(72) Inventor: Wängstre, Håkan, 611 37 Nyköping (SE); Lindqvist, Lars, 611 32 Nyköping (SE)
(74) Representative: Groth & Co. KB

(56) References cited:
- EP-A1- 0 875 975
- EP-A1- 0 971 467
- DE-A1- 4 241 390

## Description

### Technical field

The present invention relates to an installation box of the kind defined in the preamble of claim 1. In particular, the invention relates to an improved installation box that includes mounting elements which can be adapted to the thickness of the wall in which they are to be mounted.

### Background of the invention

Installation boxes, or flush mounted installation boxes, are used in the installation of electric devices in buildings so as to enable the provision of an insulated or isolated cavity for connection points and the connection of different types of electrical contact devices and electric sockets.

When installing electrical elements in newly built wall and ceiling constructions flush mounted installation boxes are secured either by nailing the box to a baton or post belonging to the wall/ceiling, or by securing them in concrete in the case, for instance, of a reinforced wall construction or ceiling construction.

When, for instance, wall/ceiling mounted electrical installations need to be complemented with a flush mounted installation box there is used conveniently a box with which the installer is able to activate mounting elements with the aid of screws so that fitting of the box can be adapted to the thickness of a wall or ceiling panel in which the box shall be fitted. When using an installation box of this nature it is desirable that the box can be readily inserted into and removed from a box mounting cavity, provided for instance in a wall or ceiling panel, without the mounting elements hooking onto the edges of the cavity and therewith making it difficult to fit and remove the box into and out of said cavity. It is also desirable that the mounting elements can be adjusted continuously and smoothly with as few screws as possible, so as to enable the box to be fitted in walls of different panel thicknesses, and to enable electrical devices to be fastened in the box with the aid of the same screws at the same time as the box is mounted in the wall. It is also desirable that the installation box will fulfill the IP4x-encapsulating class requirements, i.e. will afford protection against solid objects that are larger than 1.0 mm and that has a construction which prevents the mounting elements from being deformed or from twisting when the screws are tightened and which will also prevent loosening of the mounting elements when removing or dismantling the installation box. It is also desirable to be able to adjust any angular errors when fitting the electrical devices.

An installation box that includes four screws is known in the art. Two of the screws are intended to activate inwardly pivotal and outwardly pivotal holding elements which enable the box to be mounted in a wall or ceiling panel. The other screws are intended for fastening electrical devices in the installation box. Prior to inserting the box into or removing the box from a wall or ceiling panel, the holding elements are moved to an inwardly swung position. In this inwardly swung position, the holding elements lie inwardly of the box profile in a space provided in the box for each holding element. One drawback with this type of box is that when dismantling the box from a wall panel or ceiling panel, or when adjusting the box to correct any angular errors that may occur, the installer is forced to rely upon sufficient friction in the screw thread in order for the holding elements to rotate into the element accommodating space. It is also very difficult to know when the holding element is located in a position in which it can be swung into the accommodating space. The difficulty in determining the position of the holding element on the screw and the fact that there is nothing to prevent the holding element from being unscrewed fully means that there is a significant danger of the holding element being lost should the installer unscrew the screw too far. Another drawback with this type of installation box is that adjustment of the box in order to rectify angular errors is a complicated process due to the fact that the installer needs to adjust all four screws in order to obtain an effective result.

FR2839818 describes an installation box that includes two clamps, each being activated with the aid of a respective screw such as to both fasten the box in a wall or ceiling panel and fasten an electric device in the box. In this construction each clamp is integrated in an elongate element, which, in turn, is pivotally fastened to the bottom of the box body. In order to fit this type of installation box into a panel and to remove such a box from said panel it is necessary for an installer to first insert the screws towards the coupling cavity. Because the elongate elements are pivotally fastened to the bottom of the box, the elongate elements integrated with the clamps will rise, meaning that a force must then be applied to the screws in order to depress and deform the clamps so as to enable the clamps to be moved to a location behind the panel. This can cause damage to the plastic material of the box. One serious drawback with exposing the screws in the coupling cavity of the box, especially when removing the box, is that the screws may then be electrically conductive, i.e. live. This type of installation box does not therefore fulfill the requirements of encapsulation class IP4x, i.e. protection against solid objects that are greater than 1.0 mm. Because the clamps are integrated in the elongate elements and therewith not continuously adjustable, the ability to adapt the box to the thickness of the wall or ceiling panel concerned is limited. In addition, this known installation box can not be locked in the panel prior to an electric device being mounted in the box.

Document DE 42 41 390 discloses an installation box, having a supportive part which is adjustable by means of screws located at the side of the box. At the side of the box are teeth located which engage with teeth on the supportive part. The supportive part is adjusted by means of the screws and fixed in it's position with aid of the engaging teeth of both parts.

Document EP 875 975 discloses an installation box with a supportive part at the end of an elongated member, which member is pivotally mounted at the edge opposite the bottom and which is fixed in it's position by means of teeth at the side walls of the box and the supportive part.

Document EP 0 971 467 discloses an installation box according to the preamble of claim 1.

### Object of the invention

The object of the present invention is to provide a solution to the aforesaid problems with the aid of an improved installation box of the kind described.

### Summary of the invention

This object is achieved by the present invention as defined in the independent claim 1. Suitable embodiments of the present invention are made apparent in the dependent claims.

Thus, the present invention comprises an installation box which includes a box body that has a bottom and a side wall disposed generally at right angles to said bottom, and at least one screw which is intended to activate a respective mounting element which enables the installation box to be flush mounted in a wall or ceiling cavity, wherein an edge of said side wall defines an opening on the box body opposite to said bottom, wherein the side wall includes at least one elongate side opening which extends from said edge and down towards the bottom of the box body, wherein at least one of said at least one side opening is covered at least partially by an elongate element which is pivotally mounted in the wall of the box body wherein said screws extend along said elongate element, which is intended to support respective mounting devices, characterized in that the pivot axle of the elongate element is situated at said edge.

The invention affords the advantage that when the installation box shall be mounted in a mounting cavity it is possible to swing the elongate elements and the mounting devices inwardly towards the interior of the box. This increases the opening between the box and the edge of the mounting cavity, therewith enabling the mounting devices to be moved beyond and in behind a wall or ceiling panel. The position of the box can then be adjusted with the aid of screws intended for mounting the box against the rear side of the panel.

According to one advantageous embodiment of the invention, at least one of said mounting devices can include a supportive portion and a shelf structure that extends generally at right angles to said supportive part and that the screws can pass through the supportive part in order to allow continuous adjustment of the position of the mounting device along the elongate element. This enables mounting of the installation box to be adapted for mounting of the box in panels of mutually different thicknesses.

One surface of at least one of said elongate elements that face out from the body of the box may be provided with teeth or serrations and one surface of the supportive part that faces towards said serrated surface of the elongate element may conveniently be provided with at least one tooth. When the positions of the mounting devices has been adjust in accordance with the thickness of the panel in which the box shall be mounted, this solution enables the screws to be unscrewed to an extents sufficient to secure an electric device in the installation box without moving the mounting device out of position. Moreover, when the box needs to be brought into alignment with a mounting cavity, the installer is able to unscrew the screws a number of turns, and snap down the mounting device a number of notches on the serrated surface of the elongate element, and adjust the electric device so that it will fit in the box at the same time as the mounting device holds the box in position against the panel, and thereafter conveniently screw the box and the electric device firmly in the panel cavity.

According to another advantageous embodiment of the invention, the box body may include at least one guide part that extends from the edge of said side wall down towards the bottom of the box, on at least one side of and along part of each side opening. The benefit thus afforded is that the torque generated by the screws is not transferred as torque on the mounting device and the elongate element. The guide parts result in stable passage of a mounting device along the elongate element and therewith effective abutment with the rear side of the panel which in turn results in satisfactory mounting of the installation box in the mounting cavity. Said at least one guide part and the box body may, for instance, be designed to enable a respective mounting device that is in a non-mounted position to be swung into the interior of the box together with the elongate element so as to facilitate insertion of the box into a mounting cavity.

According to another beneficial embodiment of the invention, part of the shelf of a mounting device may, when mounted, extend out from a respective elongate element beyond said at least one guide part. The shelf is thus given a larger surface area, which, in turn, provides effective abutment with the rear side of the panel and stable mounting of the box in the mounting cavity.

According to another beneficial embodiment of the present invention the part of a mounted shelf that extends beyond said at least one guide part extends over each guide part. This prevents the elongate element and the mounting device from swinging in towards the interior of the box in a mounted state.

According to yet another beneficial embodiment of the invention a supportive member may be disposed on the underside of the shelf in order to relieve the shelf of forces acting at right angles thereon.

According to yet another beneficial embodiment of the invention, the supportive member of said at least one mounting device extends in on that side of the elongate element which faces towards the box interior. One advantage afforded by this solution is that the mounting device will constantly lie against the elongate element and can not therefore fall and be lost

According to still another beneficial embodiment of the invention, a projection may extend out from the body of the box adjacent at least one end of a side opening nearest the bottom of the box body. One advantage afforded in this way is that an installer is able to draw the mounting device down to a stop position without losing the mounting device. In this state, the installer is also aware that the mounting device is in a non-mounted position and is therefore able to move the mounting device and the elongate element in towards the box interior and readily disassemble the box in said panel cavity.

According to another beneficial embodiment of the invention a gripping element may be provided on a surface of at least one of said at least one elongate element that faces towards the box interior. In a mounted state, this enables the installer to readily grip the elongate element so as to be able to move said element and the mounting device towards the box interior.

According to another beneficial embodiment of the invention, at least one stop means may be provided on the bottom of the installation box inwardly inside each side opening. This solution is intended to prevent an elongate element and a mounting device from moving further in towards the centre of the box body in a non-mounted state of the installation, such that the outer edge of the shelf lies level with the box body. This solution ensures that the installation box fulfils the IP4x encapsulating class, i.e. protection against solid objects that are greater than 1.0 mm, and that the screws are not exposed in the coupling cavity.

According to still another beneficial embodiment of the invention, the screws may be intended for securing an electrical device in the installation box. This provides the benefit of enabling one and the same screw to be used for mounting an electrical device in the installation box and also for mounting the installation box in a mounting cavity.

### Brief description of the drawings

The invention will now be described in more detail with reference to an exemplifying embodiment thereof and also with reference to the accompanying drawings, in which
Fig. 1 is a perspective view of one embodiment of an installation box according to the present invention taken from beneath with the mounting device in a mounted position;
Fig. 2 is a perspective view of the installation box as seen from above;
Fig. 3 is a perspective view of the inventive installation box with the underside of the box facing upwards and with the mounting device in a non-mounted position or rest position; and
Fig. 4 illustrates the inventive installation box with its bottom facing upwards.

### Detailed description of the invention

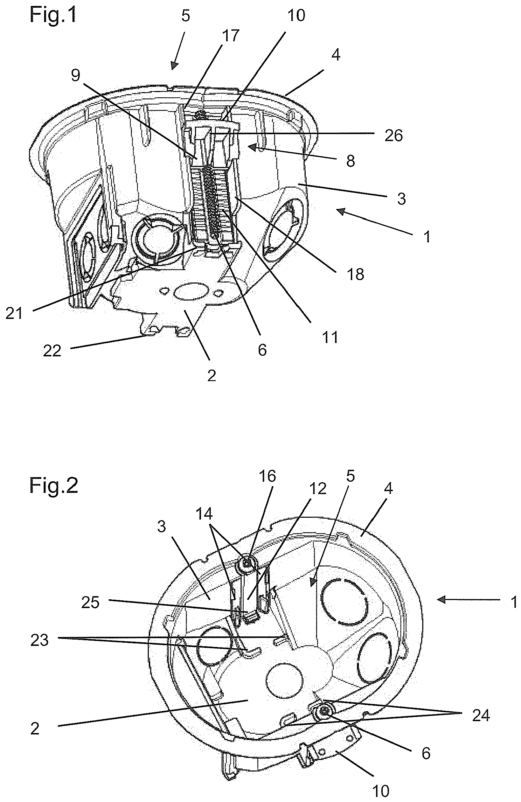

Figures 1-4 illustrate an embodiment of a flush-mounted installation box or enclosure that can be adjusted smoothly and continuously in accord with the thickness of a panel in which the installation box shall be mounted. It is emphasized that the invention is not restricted to this type of installation box and that the invention can be applied to all manner of available installation boxes.

The installation box shown in figures 1-4 includes a body that has a bottom 2 connected to a side wall 3. The side wall 3 includes an edge 4 which defines an opening 5 on the body of the box. The opening 5 is located centrally opposite the bottom 2 of the box and is intended to provide a mounting cavity for different types of electrical contact devices and power outlets or power points of different kinds. The side wall 3 also includes two elongate side openings which extend from the edge 4 of the side wall 3 and down to the bottom 2 of the box 1. In the case of the illustrated embodiment, these elongate side openings are located centrally opposite one another on the generally oval installation box 1, although said side openings may, of course, be placed relative to one another in other ways. The elongate side openings are covered by a respective pivotally disposed elongate element, 11, 12 having pivot axles located at the edge 4 of the side wall 3 of said body. In order to enable the box 1 to be mounted in a mounting cavity there is provided a mounting element 8, 13 which includes a supportive part 9, 14 and a shelf structure 10, 15 which extends generally at right angles in relation to the supportive part 9, 14 and which at least partially surrounds each of the elongate elements 11, 12. The position of the mounting devices 8, 13 relative to the elongate elements 11, 12 can be adjusted continuously and smoothly with the aid of a respective screw 6, 16. The two screws 6, 16 that are shown fastened adjacent the edge 4 of the side wall 3 of the box extend along the elongate elements 11, 12 and pass through the supportive part 9, 14 of respective mounting elements 8, 13. A guide part 17, 18, 19, 20 extends from the body of the box on both sides of the elongate side openings. The guide parts 17, 18, 19, 20, which extend from the edge 4 of the side wall 3 down towards the bottom 2 of the box body, are intended to prevent torque generated by the screws 6, 16 from being transferred to rotary movement or torque on the mounting device 8, 13 and the elongate element 11, 12, and also to prevent the mounting device 8, 13 and the elongate element 11, 12 from being able to swing in towards the box interior in a mounted state. Such pivotal movement is prevented by reason of that part of the shelf structure 10, 15 which extends beyond the guide parts 17, 18, 19, 20 in a mounted position also extending over said guide parts.

When the installation box 1 shall be inserted into a mounting cavity, for instance in the wall or ceiling of a building structure, the mounting devices 8, 13 are pushed towards a respective projection 21, 22 disposed at one end of respective side openings and lying closest to the bottom 2 of the box 1. The projection 21, 22 has essentially two purposes, i.e. one being to indicate to the user that the mounting device 18, 13 is in a non-mounted position or rest position, and the other to prevent the mounting device 8, 13 being lost as a result of a user, or installer, unintentionally unscrewing the screws 6, 16 completely from the supportive part 9, 14 of the mounting device 8, 13. Subsequent to having brought the mounting device 8, 13 into contact with the projection 21, 22, the mounting device 8, 13 can be swung in towards the box interior together with the elongate element 11, 12. In the illustrating figures, the mounting device 8, 13 is able to pass between the projection 21, 22 and that end of the guide part 17, 18, 19, 20 that lies nearest the bottom 2 of the box 1. By swinging the mounting device 8, 13 in towards the interior of the box 1, the distance between the box 1 and the edge of the mounting cavity is increased sufficiently for the box 1 to be easily inserted into the mounting cavity. When the box 1 has been inserted effectively into the mounting cavity, the mounting device 8, 13 and the elongate element 11, 12 snap back into their original state or position. The mounting devices 8, 13 can now be adjusted smoothly and continuously with regard to the thickness of the panel in which the box is inserted with the aid of respective screws 6, 16, such as to bring the shelf structure 10, 15 of the mounting device 8, 13 into contact with the rear side of the panel. The installation box 1 is now mounted in the mounting cavity.

Figure 1 is a perspective view of the installation box 1 from beneath. The mounting device 8 is shown in figure 1 in a mounted state.

Figure 2 is a perspective view of the installation box 1 from above, wherewith the supportive part 14 extends around the elongate element 12 in on that side which faces inwardly towards the box interior. Although not shown, the mounting device 13 is herewith supported by the elongate element 12 therewith obviating the risk of it falling and being lost. As shown in figure 2, two stop members 23, 24 are provided in the box interior on the bottom 2 of the box 1. The stop member 23 prevents movement of the elongate element 12 towards the centre axis of the box 1, while the stop member 24 prevents movement of the elongate element 11 (not shown) towards the centre axis of the box 1. A gripping element 25 is also disposed on the inside of the elongate element 12 so as to facilitate swinging of the elongate element 12 inwardly towards the box interior.

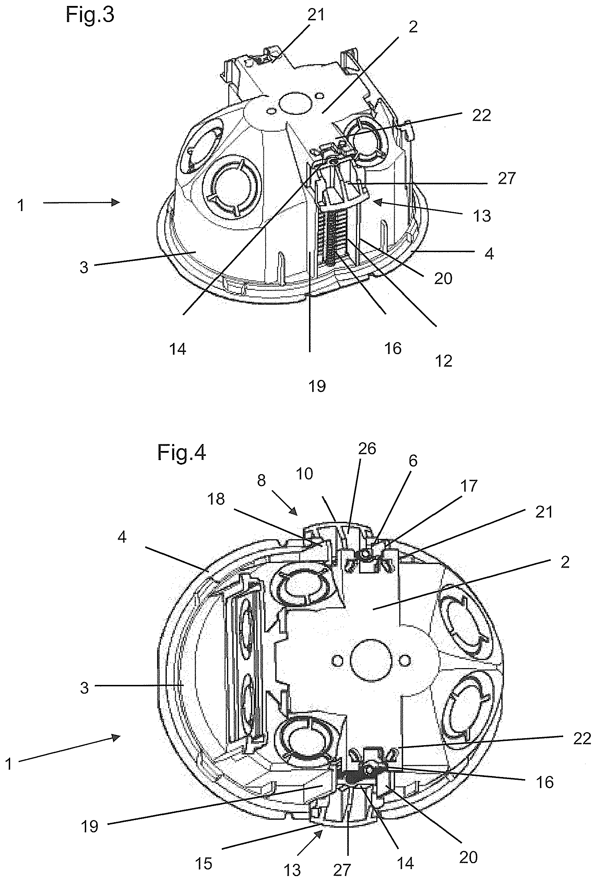

Figure 3 is a perspective view of the installation box 1 with its bottom 2 facing upwards. In this figure the mounting device 13 is shown in a non-mounted position or rest position. The surface of the elongate element 12 that faces outwardly from the box 1 includes a number of teeth or serrations. Correspondingly, the supportive part 14 of the mounting device 13 is provided with a tooth (not shown) so as to enable the device 13 to take fixed positions along the elongate element 12. These fixed positions are utilized in holding the box 1 in position in connection with mounting the electrical arrangement in the box 1, for instance when desiring to make adjustments with respect to any angular errors when mounting an electric arrangement.

When the box 1 has been mounted behind a wall, the electrical device can be mounted in the box 1. The two screws 6, 16 (see figure 2 and figure 4) are now unscrewed or backed-off a number of turns so as to enable the electrical device to be fastened to the box 1 with the aid of the two screws 6, 16. Despite the screws 6, 16 being backed-off, the box 1 will still be firmly fastened behind the panel. The teeth on the supportive part 9, 14 of the mounting device 8, 13 cause the mounting device 8, 13 to remain in engagement with the teeth on the elongate element 11, 12, even though the screws 6, 16 have been loosened and therewith prevent the mounting device 8, 13 from moving along the elongate element 11, 12. When the electrical device has been mounted in the box 1, the screws 6, 16 are tightened, wherewith both the box 1 and the electrical device are held mounted in the panel cavity. Moreover, a supportive device 26, 27 is provided on the underside of each shelf structure 10, 15. This relieves the shelf structure 10, 15 of all forces that act at right angles on said structure.

Figure 4 shows the installation box 1 with its bottom 2 facing upwards. The two mounting devices 8, 13 are disposed opposite one another on the side wall 3 of the box. Figure 4 shows the mounting devices 8, 13 in their mounting position.

## Claims

1. An installation box comprising a body that includes a bottom (2) and a side wall (3) disposed generally at right angles to said bottom (2), and at least one screw (6, 16) which is part of a respective mounting device (8, 13), wherein the side wall (3) includes an edge (4) which defines an opening (5) on the box body opposite said bottom (2), wherein the side wall (3) includes at least one elongate side opening that extends from said edge (4) down to the bottom (2) of the box body, wherein an elongate element (11, 12) is situated in the side opening together with one mounting device (8, 13) and one screw (6, 16) which elongate element is pivotally disposed in the wall (3) of said body wherein said screw (6, 16) extend along said elongate element (11, 12), and wherein the elongate element (11, 12) support the respective mounting device (8, 13), and wherein the pivot axis of the elongate element (11, 12) is located adjacent said edge (4), a projection (21, 22) which extends out from the body of the box at least one end of a side opening nearest the bottom (2) of the box body and at least one of the mounting devices (8, 13) includes a supportive part (9, 14) and a shelf structure (10, 15) generally at right angles to said supportive part (9, 14) and said screw (6, 16) runs through the supportive part (9, 14) which screw (6, 16) is able to continuously adjust the position of the mounting device (8, 13) along the elongate element (11, 12) **characterised in that** one surface directed out from the box body of at least one of said elongate elements (11, 12) is provided with teeth or serrations and **in that** a surface of the supportive part (9, 14) directed towards said surface of the elongate element (11, 12) is provided with at least one tooth, the teeth of the elongate element and the at least one tooth of the supportive part are engaging with each other.

2. An installation box according to claim 1, **characterized by** at least one guide part (17, 18, 19, 20) which projects out from the box body and which extends from the edge (4) of said side wall (3) towards the bottom (2) of the box body on at least one side of and along a part of each side opening.

3. An installation box according to claim 2, **characterized in that** said at least one guide part (17, 18, 19, 20) and the box body are constructed so that with respective mounting devices (8, 13) in a non-mounted position said devices (8, 13) can be swung into the interior of the box (1) together with the elongate element (11, 12) to facilitate insertion of the box (1) into a mounting cavity.

4. An installation box according to any one of claims 2-3, **characterized in that** in a mounted state the shelf structure (10, 15) of a mounting device (8, 13) extends out from a respective elongate element (11, 12) beyond said at least one guide part (17, 18, 19, 20).

5. An installation box according to claim 4, **characterized in that** said part of a mounted shelf structure (10, 15) that extends beyond said at least one guide part (17, 18, 19, 20) also extends over each guide part (17, 18, 19, 20) such as to prevent the elongate element (11, 12) and the mounting device (8, 13) swinging in towards the box interior in a mounted state.

6. An installation box according to any one of claims 1-5, **characterized by** a supportive device (26, 27) provided on the underside of the shelf structure (10, 15) so as to relieve the shelf structure (10, 15) of forces that act perpendicularly on said structure.

7. An installation box according to any one of claims 1-6, **characterized in that** the supportive part (9, 14) of said at least one mounting device (8, 13) extends in on that side of the elongate element (11, 12) that faces towards the box interior.

8. An installation box according to any one of the preceding claims, **characterized by** a gripping element (25) disposed on a surface of at least one of said at least one elongate element (11, 12) that faces towards the box interior.

9. An installation box according to any one of claims 1-8, **characterized in that** there is provided in the box interior on the bottom (2) of said box (1) inwardly of each side opening at least one stop member (23, 24) in order to prevent an elongate element (11, 12) and a mounting device (8, 13) from moving further in towards the centre of the box body to an extent such that the outer edge of the shelf structure (10, 15) will lie level with the box body in the non-mounted state of the installation box (1).

10. An installation box according to any one of the preceding claims, **characterized in that** the screws (6, 16) also are intended for fastening an electrical device in the installation box (1).

## Patentansprüche

1. Installationskasten, der einen Körper, der einen Boden (2) und eine Seitenwand (3), die im Allgemeinen rechtwinklig zu dem Boden (2) angeordnet ist, enthält, und wenigstens eine Schraube (6, 16), die ein Teil einer entsprechenden Montagevorrichtung (8, 13) ist, umfasst, wobei die Seitenwand (3) eine Kante (4) aufweist, die eine Öffnung (5) an dem Kastenkörper gegenüber dem Boden (2) definiert, wobei die Seitenwand (3) wenigstens eine längliche Seitenöffnung aufweist, die sich von der Kante (4) nach unten zu dem Boden (2) des Kastenkörpers erstreckt, wobei sich in der Seitenöffnung ein längliches Element (11, 12) zusammen mit einer Montagevorrichtung (8, 13) und einer Schraube (6, 16) befindet, wobei das längliche Element in der Wand (3) des Körpers drehbar angeordnet ist, wobei sich die Schraube (6, 16) längs des länglichen Elements (11, 12) erstreckt und wobei das längliche Element (11, 12) die jeweilige Montagevorrichtung (8, 13) trägt und wobei sich die Drehachse des länglichen Elements (11, 12) in der Nähe der Kante (4) befindet, wobei sich ein Vorsprung (21, 22) aus dem Körper des Kastens wenigstens an einem Ende einer Seitenöffnung, die sich am nächsten bei dem Boden (2) des Kastenkörpers befindet, erstreckt und wenigstens eine der Montagevorrichtungen (8, 13) einen tragenden Teil (9, 14) und eine Fachstruktur (10, 15) im Allgemeinen rechtwinklig zu dem tragenden Teil (9, 14) aufweist und die Schraube (6, 16) durch den tragenden Teil (9, 14) verläuft, wobei die Schraube (6, 16) die Position der Montagevorrichtung (8, 13) längs des länglichen Elements (11, 12) kontinuierlich einstellen kann, **dadurch gekennzeichnet, dass** eine Oberfläche wenigstens eines der länglichen Elemente (11, 12), die aus dem Kastenkörper weist, mit Zähnen oder Zahnungen versehen ist und dass eine Oberfläche des tragenden Teils (9, 14), die zu der Oberfläche des länglichen Elements (11, 12) gerichtet ist, mit wenigstens einem Zahn versehen ist, wobei die Zähne des länglichen Elements und der wenigstens eine Zahnung des tragenden Teils miteinander in Eingriff sind.

2. Installationskasten nach Anspruch 1, **gekennzeichnet durch** ein Führungsteil (17, 18, 19, 20), das von dem Kastenkörper vorsteht und sich von der Kante (4) der Seitenwand (3) zum Boden (2) des Kastenkörpers auf wenigstens einer Seite und längs eines Teils jeder Seitenöffnung erstreckt.

3. Installationskasten nach Anspruch 2, **dadurch gekennzeichnet, dass** das wenigstens eine Führungsteil (17, 18, 19, 20) und der Kastenkörper in der Weise konstruiert sind, dass dann, wenn jeweilige Montagevorrichtungen (8, 13) in einer nicht montierten Position sind, die Vorrichtungen (8, 13) zusammen mit dem länglichen Element (11, 12) in den Innenraum des Kastens (1) geschwenkt werden können, um das Einsetzen des Kastens (1) in einen Montagehohlraum zu erleichtern.

4. Installationskasten nach einem der Ansprüche 2-3, **dadurch gekennzeichnet, dass** sich die Fachstruktur (10, 15) einer Montagevorrichtung (8, 13) in einem montierten Zustand aus einem jeweiligen länglichen Element (11, 12) über das wenigstens eine Führungsteil (17, 18, 19, 20) hinaus erstreckt.

5. Installationskasten nach Anspruch 4, **dadurch gekennzeichnet, dass** der Teil einer montierten Fachstruktur (10, 15), der sich über den wenigstens einen Führungsteil (17, 18, 19, 20) hinaus erstreckt, auch über jedes Führungsteil (17, 18, 19, 20) erstreckt, um so zu verhindern, dass das längliche Element (11, 12) und die Montagevorrichtung (8, 13) in einem montierten Zustand in den Innenraum des Kastens schwenken.

6. Installationskasten nach einem der Ansprüche 1-5, **dadurch gekennzeichnet, dass** an der Unterseite der Fachstruktur (10, 15) eine tragende Vorrichtung (26, 27) vorgesehen ist, um die Fachstruktur (10, 15) von Kräften zu entlasten, die senkrecht auf die Struktur wirken.

7. Installationskasten nach einem der Ansprüche 1-6, **dadurch gekennzeichnet, dass** sich der tragende Teil (9, 14) der wenigstens eine Montagevorrichtung (8, 13) auf jener Seite des länglichen Elements (11, 12) erstreckt, die dem Kasteninnenraum zugewandt ist.

8. Installationskasten nach einem der vorhergehenden Ansprüche, **gekennzeichnet durch** ein Greifelement (25), das auf einer Oberfläche wenigstens eines des wenigstens einen länglichen Elements (11, 12) angeordnet ist, die dem Kasteninnenraum zugewandt ist.

9. Installationskasten nach einem der Ansprüche 1-8, **dadurch gekennzeichnet, dass** in dem Kasteninnenraum auf dem Boden (2) des Kastens (1) innerhalb jeder Seitenöffnung wenigstens ein Anschlagelement (23, 24) vorgesehen ist, um zu verhindern, dass sich ein längliches Element (11, 12) und eine Montagevorrichtung (8, 13) in einem Ausmaß weiter zu der Mitte des Kastenkörpers bewegen, derart, dass die Außenkante der Fachstruktur (10, 15) in dem nicht montierten Zustand des Installationskastens (1) mit dem Kastenkörper bündig ist.

10. Installationskasten nach einem der vorhergehenden Ansprüche, **dadurch gekennzeichnet, dass** die Schrauben (6, 16) außerdem dazu vorgesehen sind, eine elektrische Vorrichtung in dem Installationskasten (1) zu befestigen.

## Revendications

1. Boîte d'installation comportant un corps qui comprend un fond (2) et une paroi latérale (3) disposée généralement à angle droit dudit fond (2), et au moins une vis (6, 16) qui fait partie d'un dispositif de montage respectif (8, 13), dans laquelle la paroi latérale (3) comprend un bord (4) qui définit une ouverture (5) sur le corps de la boîte opposée audit fond (2), dans laquelle la paroi latérale (3) comprend au moins une ouverture latérale allongée qui s'étend depuis ledit bord (4) jusqu'au fond (2) du corps de la boîte, dans laquelle un élément allongé (11, 12) est situé dans l'ouverture latérale avec un dispositif de montage (8, 13) et une vis (6, 16), lequel élément allongé est disposé de manière pivotante dans la paroi (3) dudit corps, dans laquelle ladite vis (6, 16) s'étend le long dudit élément allongé (11, 12), et dans laquelle l'élément allongé (11, 12) supporte le dispositif de montage respectif (8, 13), et dans laquelle l'axe de pivot de l'élément allongé (11, 12) est situé en position adjacente dudit bord (4), une saillie (21, 22) qui s'étend vers l'extérieur depuis le corps de la boîte à au moins une extrémité d'une ouverture latérale la plus proche du fond (2) du corps de la boîte et au moins un des dispositifs de montage (8, 13) comprend une partie de support (9, 14) et une structure d'étagère (10, 15) généralement à angle droit de ladite partie de support (9, 14) et ladite vis (6, 16) s'étend à travers la partie de support (9, 14), laquelle vis (6, 16) est capable de régler de façon continue la position du dispositif de montage (8, 13) le long de l'élément allongé (11, 12), **caractérisée en ce qu'**une surface, dirigée vers l'extérieur depuis corps de la boîte, d'au moins un des éléments allongés (11, 12) est pourvue de dents ou de dentelures et **en ce qu'**une surface de la partie de support (9, 14) dirigée vers ladite surface de l'élément allongé (11, 12) est pourvue d'au moins une dent, les dents de l'élément allongé et l'au moins une dent de la partie de support s'engageant l'une avec l'autre.

2. Boîte d'installation selon la revendication 1, **caractérisée par** au moins une partie de guidage (17, 18, 19, 20) qui fait saillie vers l'extérieur depuis le corps de la boîte et qui s'étend depuis le bord (4) de ladite paroi latérale (3) vers le fond (2) du corps de la boîte sur au moins un côté de chaque ouverture latérale et le long d'une partie de celle-ci.

3. Boîte d'installation selon la revendication 2, **caractérisée en ce que** ladite au moins une partie de guidage (17, 18, 19, 20) et le corps de la boîte sont construits de manière à ce que, avec les dispositifs de montage respectifs (8, 13) dans une position non montée, lesdits dispositifs (8, 13) peuvent être pivotés dans l'intérieur de la boîte (1) avec l'élément allongé (11, 12) de façon à faciliter l'insertion de la boîte (1) dans une cavité de montage.

4. Boîte d'installation selon l'une quelconque des revendications 2 à 3, **caractérisée en ce que,** dans un état monté, la structure d'étagère (10, 15) d'un dispositif de montage (8, 13) s'étend vers l'extérieur depuis un élément allongé respectif (11, 12) au-delà de ladite au moins une partie de guidage (17, 18, 19, 20).

5. Boîte d'installation selon la revendication 4, **caractérisée en ce que** ladite partie d'une structure d'étagère montée (10, 15) qui s'étend au-delà de ladite au moins une partie de guidage (17, 18, 19, 20) s'étend aussi au-dessus de chaque partie de guidage (17, 18, 19, 20) de façon à empêcher l'élément allongé (11, 12) et le dispositif de montage (8, 13) de pivoter vers l'intérieur de la boîte dans un état monté.

6. Boîte d'installation selon l'une quelconque des revendications 1 à 5, **caractérisée par** un dispositif de support (26, 27) prévu sur le dessous de la structure d'étagère (10, 15) de façon à soulager la structure d'étagère (10, 15) de forces qui agissent perpendiculairement sur ladite structure.

7. Boîte d'installation selon l'une quelconque des revendications 1 à 6, **caractérisée en ce que** la partie de support (9, 14) dudit au moins un dispositif de montage (8, 13) s'étend vers l'intérieur sur ce côté de l'élément allongé (11, 12) qui est tourné vers l'intérieur de la boîte.

8. Boîte d'installation selon l'une quelconque des revendications précédentes, **caractérisée par** un élément de saisie (25) disposé sur une surface d'au moins un dudit au moins un élément allongé (11, 12) qui est tourné vers l'intérieur de la boîte.

9. Boîte d'installation selon l'une quelconque des revendications 1 à 8, **caractérisée en ce qu'**il est prévu dans l'intérieur de la boîte sur le fond (2) de ladite boîte (1) vers l'intérieur de chaque ouverture latérale au moins un élément d'arrêt (23, 24) de façon à empêcher un élément allongé (11, 12) et un dispositif de montage (8, 13) de se déplacer encore plus vers le centre du corps de la boîte jusqu"à un point où le bord extérieur de la structure d'étagère (10, 15) se trouvera à niveau avec le corps de la boîte dans l'état non monté de la boîte d'installation (1).

10. Boîte d'installation selon l'une quelconque des revendications précédentes, **caractérisée en ce que** les vis (6, 16) sont aussi destinées à fixer un dispositif électrique dans la boîte d'installation (1).
